# EUROPÄISCHE PATENTSCHRIFT

(11) **EP 1 363 715 B1**
(45) Veröffentlichungstag und Bekanntmachung des Hinweises auf die Patenterteilung: **27.07.2005**
(21) Anmeldenummer: 02716756.8
(22) Anmeldetag: 09.02.2002
(51) Int. Cl.: B01D 17/00

(54) **ALKOXYLIERTE POLYGLYCERINE UND IHRE VERWENDUNG ALS EMULSIONSSPALTER**
ALKOXYLATED POLYGLYCEROLS AND THEIR USE AS DEMULSIFIERS
POLYGLYCERINES ALKOXYLEES ET LEUR UTILISATION EN TANT QUE SEPARATEURS D'EMULSION

(30) Priorität: 20.02.2001 DE 10107880
(43) Veröffentlichungstag der Anmeldung: 26.11.2003
(73) Patentinhaber: Clariant GmbH, 65929 Frankfurt am Main (DE)
(72) Erfinder: LEINWEBER, Dirk, 84453 Mühldorf (DE); SCHERL, Franz, Xaver, 84508 Burgkirchen (DE); WASMUND, Elisabeth, 84508 Burgkirchen (DE); GRUNDNER, Heidi, 84518 Garching/Alz (DE)
(74) Vertreter: Mikulecky, Klaus, Dr.
(86) Internationale Anmeldenummer: PCT/EP2002/001376
(87) Internationale Veröffentlichungsnummer: WO 2002/066136

(56) Entgegenhaltungen:
- DD-A- 229 006
- DE-A- 2 360 020
- US-A- 2 552 528
- US-A- 2 944 982
- US-A- 3 110 736
- US-A- 3 110 737
- US-A- 4 265 774
- US-A- 4 321 146
- US-A- 4 342 657
- US-A- 5 981 687

## Beschreibung

Die vorliegende Erfindung betrifft die Verwendung alkoxylierter Polyglycerine, herstellbar durch Polykondensation von Glycerin und anschließende Alkoxylierung, zur Spaltung von Wasser-Öl-Emulsionen, insbesondere in der Rohölgewinnung.

Rohöl fällt bei seiner Förderung als Emulsion mit Wasser an. Vor der Weiterverarbeitung des Rohöls müssen diese Rohölemulsionen in den Öl- und den Wasseranteil gespalten werden. Hierzu bedient man sich im allgemeinen sogenannter Erdölspalter. Es handelt sich bei Erdölspaltern um grenzflächenaktive Verbindungen, die in der Lage sind, innerhalb kurzer Zeit die erforderliche Trennung der Emulsionsbestandteile zu bewirken.

Als Erdölspalter sind in US-4 321 146 Alkylenoxid-Blockcopolymere und in US-5 445 765 alkoxylierte Polymine offenbart. Diese können als einzelne Komponenten, in Mischungen mit anderen Emulsionsspaltern, oder auch als vernetzte Produkte eingesetzt werden. Vernetzungen werden in der Regel durch Umsetzungen der einzelnen Emulsionsspalterkomponenten mit bifunktionellen Verbindungen wie Diepoxiden oder Diisocyanaten durchgeführt. Solche vernetzten Verbindungen werden in US-5 759 409 und US-5 981 687 offenbart.

Die Verwendung alkoxylierten Glycerins als demulgierendem Bestandteil in Schmierölen wurde in DD-229006 beschrieben. Hierbei wird Glycerin mit Alkylenoxiden entweder zu einem Blockcopolymer oder einem statistischen Copolymer umgesetzt.

Alkoxylierte Polyglycerine sind per se bekannt. Sie sind im Stand der Technik für verschiedene Anwendungen beschrieben. Beispielsweise wurden in US-5 502 219 alkoxylierte Polyglycerine verestert, um ein kalorienarmen Ersatzstoff für Pflanzenöle herzustellen. In US-4 061 684 wurden die alkoxylierten Polyglycerine verestert und als in Wasser quellende Gele verwendet. Alkoxylierte Polyglycerine, die mit alpha-Olefinepoxiden umgesetzt wurden, wirken gemäß WO-98/03243 als Entschäumer. Durch Sulfatierung von alkoxylierten Polyglycerinen gelangt man zu Substanzen, die in Haarshampoos verwendet werden, wie US-4 263 178 offenbart. Alkoxylierte Polyglycerine wurden aber noch nicht als Emulsionsspalter verwendet.

Die unterschiedlichen Eigenschaften (z.B. Asphalten- und Paraffingehalt) und Wasseranteile verschiedener Rohöle machen es unabdingbar, die bereits vorhandenen Erdölspalter weiter zu entwickeln. Insbesondere steht eine niedrige Dosierrate des einzusetzenden Erdölspalters neben der anzustrebenden höheren Effektivität aus ökonomischer und ökologischer Sicht im Vordergrund.

Es ergab sich somit die Aufgabe, neue Erdölspalter entwickeln, die den bereits bekannten alkoxylierten Polyalkylenglykolen bzw. Polyminen in der Wirkung überlegen sind, und in noch niedrigerer Dosierung eingesetzt werden können.

Es stellte sich überraschenderweise heraus, dass alkoxylierte Polyglycerine bereits bei sehr niedriger Dosierung eine ausgezeichnete Wirkung als Erdölspalter zeigen.

Gegenstand der Erfindung ist daher die Verwendung alkoxylierter Polyglycerine mit einem Molekulargewicht von 250 bis 100.000 Einheiten, welche 2 bis 100 Glycerineinheiten umfassen, deren freien OH-Gruppen mit, Ethylenoxid und Propylenoxid im Verhältnis von 1:2 bis 1:10 alkoxyliert sind so dass das alkoxylierte Polyglycerin einen Alkoxylierungsgrad von 1 bis 100 Alkylenoxideinheiten pro freier OH-Gruppe aufweist, zur Spaltung von Öl/Wasser-Emulsionen in Mengen von 0,0001 bis 5 Gew.-%, bezogen auf den Ölgehalt der zu spaltenden Emulsion.

Diese alkoxylierten Polyglycerine sind aus Polyglycerinen mit 2 bis 100 Glycerineinheiten durch Alkoxylierung der freien OH-Gruppen mit einem C₂-C₄-Alkylenoxid oder einer Mischung solcher Alkylenoxide im molaren Überschuss erhältlich, so dass das alkoxylierte Polyglycerin den genannten Alkoxylierungsgrad aufweist.

Die Herstellung des Polyglycerins ist im Stand der Technik bekannt und erfolgt im allgemeinen durch sauer oder alkalisch katalysierte Kondensation von Glycerin. Die Reaktionstemperatur liegt im allgemeinen zwischen 150 und 300°C, vorzugsweise bei 200 bis 250°C. Die Reaktion wird normalerweise bei Atmosphärendruck durchgeführt. Als katalysierende Säuren sind beispielsweise HCl, H₂SO₄, Sulfonsäuren oder H₃PO₄ zu nennen, als Basen NaOH oder KOH, die in Mengen von 0,1 bis 50 Gew.-%, bezogen auf das Gewicht des Reaktionsgemisches verwendet werden. Die Kondensation nimmt im allgemeinen 3 bis 10 Stunden in Anspruch. Polyglycerine lassen sich durch Formel 1 darstellen.

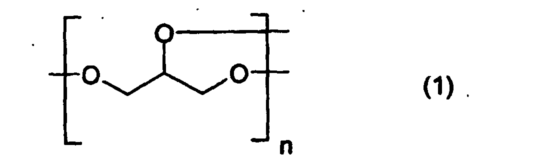

In Formel 1 steht n für den Kondensationsgrad, also die Zahl der Glycerineinheiten. n nimmt mit zunehmender Reaktionszeit zu und wird mittels OH-Zahl bestimmt.

Die aus der Kondensation erhaltenen Polyglycerine werden dann mit Ethylenoxid (EO) und Propylenoxid (PO) alkoxyliert. Das Alkoxylierungsmittel wird im molaren Überschuss angewandt. Die Alkoxylierung erfolgt, wie im Stand der Technik bekannt, durch Umsetzung der Polyglycerine mit einem Alkylenoxid unter erhöhtem Druck von im allgemeinen 1,1 bis 20 bar bei Temperaturen von 50 bis 200°C. Die Alkoxylierung erfolgt an den freien OH-Gruppen der Polyglycerine. Es wird so viel Alkylenoxid eingesetzt, dass der mittlere Alkoxylierungsgrad zwischen 1 und 100 Alkylenoxideinheiten pro freier OH-Gruppe liegt. Unter mittlerem Alkoxylierungsgrad wird hier die durchschnittliche Zahl von Alkoxyeinheiten verstanden, die an jede freie OH-Gruppe angelagert wird. Er liegt vorzugsweise bei 2 bis 70, insbesondere bei 5 bis 50.

Die Alkoxylierung wird mit einer Mischung aus EO und PO durchgeführt. Das Verhältnis von EO zu PO im alkoxylierten Polyglycerin liegt zwischen 1:2 und 1:10.

Das nach Kondensation und Alkoxylierung erhaltene alkoxylierte Polyglycerin hat vorzugsweise ein Molekulargewicht von 500 bis 50.000 Einheiten, insbesondere von 1000 bis 10.000 Einheiten.

Die nach dem beschriebenen Verfahren hergestellten alkoxylierten Polyglycerine können durch folgende Struktur wiedergegeben werden (Formel 2): 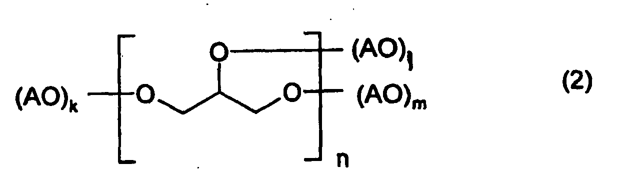 (AO)_{k, l, m}O stehen für die alkoxylierten OH-Reste, worin AO eine C₂-C₄-Alkylenoxideinheit und k, l, m die Alkoxylierungsgrade darstellen. n steht für den Kondensationsgrad des Glycerins. n ist vorzugsweise eine Zahl von 3 bis 50, besonders bevorzugt 4 bis 30.

Ein bevorzugter Gegenstand vorliegender Erfindung ist die Verwendung der alkoxylierten Polyglycerine als Spalter für Öl/Wasser-Emulsionen in der Erdölförderung.

Zur Verwendung als Erdölspalter werden die alkoxylierten Polyglycerine den Wasser-Öl-Emulsionen zugesetzt, was vorzugsweise in Lösung geschieht. Als Lösungsmittel für die alkoxylierten Polyglycerine werden paraffinische oder aromatische Lösungsmittel bevorzugt. Die alkoxylierten Polyglycerine werden in Mengen von 0,0001 bis 5, vorzugsweise 0,0005 bis 2, insbesondere 0,0008 bis 1 und speziell 0,001 bis 0,1 Gew.-% bezogen auf den Ölgehalt der zu spaltenden Emulsion verwendet.

### Beispiele

### Beispiel 1

### Herstellung von Pentadecaglycerin

In einem 500 ml Dreihalskolben mit Kontaktthermometer, Rührer und Wasserauskreiser wurden 100,0 g Glycerin und 3,7 g NaOH (18 %ig) vermischt. Unter Rühren und Stickstoffspülung wurde das Reaktionsgemisch schnell auf 240°C erhitzt. Bei dieser Temperatur wurde das Reaktionswasser über 8 h abdestilliert. Das Produkt wurde am Rotationsverdampfer zur Trockene einrotiert (Ausbeute: 67,3 g) und die Molmasse über GPC (mit Standard Polyethylenglykol) analysiert. Die Kettenlänge n wurde per OH-Zahl bestimmt.

### Beispiel 2

### Herstellung von Decaglycerin

In einem 500 ml Dreihalskolben mit Kontaktthermometer, Rührer und Wasserauskreiser wurden 100,0 g Glycerin und 3,7 g NaOH (18 %ig) vermischt. Unter Rühren und Stickstoffspülung wurde das Reaktionsgemisch schnell auf 240°C erhitzt. Bei dieser Temperatur wurde das Reaktionswasser über 5 h abdestilliert. Das Produkt wurde am Rotationsverdampfer zur Trockene einrotiert (Ausbeute: 74,9 g) und über GPC analysiert. Die Kettenlänge n wurde per OH-Zahl bestimmt.

### Beispiel 3

### Herstellung von Pentaeicosaglycerin

In einem 500 ml Dreihalskolben mit Kontaktthermometer, Rührer und Wasserauskreiser wurden 100,0 g Glycerin und 3,7 g NaOH (18%ig) vermischt. Unter Rühren und Stickstoffspülung wurde das Reaktionsgemisch schnell auf 240°C erhitzt. Bei dieser Temperatur wurde das Reaktionswasser über 12 h abdestilliert. Das Produkt wurde am Rotationsverdampfer zur Trockene einrotiert (Ausbeute: 58,4 g) und über GPC analysiert. Die Kettenlänge n wurde per OH-Zahl bestimmt.

### Beispiel 4

### Pentacontanglycerin

In einem 500 ml Dreihalskolben mit Kontaktthermometer, Rührer und Wasserauskreiser wurden 100,0 g Glycerin und 3,7 g NaOH (18 %ig) vermischt. Unter Rühren und Stickstoffspülung wurde das Reaktionsgemisch schnell auf 240°C erhitzt. Bei dieser Temperatur wurde das Reaktionswasser über 20 h abdestilliert. Das Produkt wurde am Rotationsverdampfer zur Trockene einrotiert (Ausbeute: 54,9 g) und über GPC analysiert. Die Kettenlänge n wurde per OH-Zahl bestimmt.

### Alkoxylierung der Polyglycerine

### Ethylenoxid

Die oben beschriebenen Polyglycerine wurden in einen 1 l-Glasautoklaven eingebracht und der Druck im Autoklaven mit Stickstoff auf ca. 0,2 bar Überdruck eingestellt. Es wurde langsam auf 140°C aufgeheizt und nach Erreichen dieser Temperatur der Druck erneut auf 0,2 bar Überdruck eingestellt. Danach wurde bei 140°C die gewünschte Menge EO zudosiert, wobei der Druck 4,5 bar nicht übersteigen sollte. Nach beendeter EO-Zugabe ließ man noch 30 Minuten bei 140°C nachreagieren.

### Propylenoxid

Die oben beschriebenen Polyglycerine wurden in einen 1 l-Glasautoklaven eingebracht und der Druck im Autoklaven mit Stickstoff auf ca. 0,2 bar Überdruck eingestellt. Es wurde langsam auf 130°C aufgeheizt und nach Erreichen dieser Temperatur der Druck erneut auf 0,2 bar Überdruck eingestellt. Danach wurde bei 130°C die gewünschte Menge PO zudosiert, wobei der Druck 4,0 bar nicht übersteigen sollte. Nach beendeter PO-Zugabe ließ man noch 30 Minuten bei 130°C nachreagieren.

Der Alkoxylierungsgrad wurde mittels ¹³C-NMR bestimmt

### Bestimmung der Spaltwirksamkeit von Erdölemulsionsspaltern

Zur Bestimmung der Wirksamkeit eines Emulsionsspalters wurde die Wasserabscheidung aus einer Rohölemulsion pro Zeit sowie die Entwässerung und Entsalzung des Öls bestimmt. Dazu wurden in Spaltergläser (konisch zulaufende, verschraubbare, graduierte Glasflaschen) jeweils 100 ml der Rohölemulsion eingefüllt, jeweils eine definierte Menge des Emulsionsspalters mit einer Mikropipette knapp unter die Oberfläche der Ölemulsion zudosiert und der Spalter durch intensives Schütteln in die Emulsion eingemischt. Danach wurden die Spaltergläser in ein Temperierbad (30°C und 50°C) gestellt und die Wasserabscheidung verfolgt.

Während und nach beendeter Emulsionsspaltung wurden Proben von dem Öl aus dem oberen Teil des Spalterglases (sog. Topöl) entnommen und der Wassergehalt nach Karl Fischer und der Salzgehalt konduktometrisch bestimmt. Auf diese Weise konnten die neuen Spalter nach Wasserabscheidung sowie Entwässerung und Entsalzung des Öls beurteilt werden.

### Spaltwirkung der beschriebenen Spalter

| Ursprung der Rohölemulsion: | Holzkirchen Sonde 3, Deutschland |
|---|---|
| Wassergehalt der Emulsion | 46 % |
| Salzgehalt der Emulsion | 5 % |
| Demulgiertemperatur | 50°C |

**Tabelle 1:**

| Wirksamkeit von alkoxylierten Polyglycerinen als Emulsionsspalter | | | | | | | | | | | | |
|---|---|---|---|---|---|---|---|---|---|---|---|---|
| Zeit/min | | | | | | | | | | | | |
| Wasserabscheidung [ml] pro Zeit [min] | Dosierung [ppm] | 5 | 10 | 20 | 30 | 45 | 60 | 90 | 120 | 180 | Wasser im Topöl[%] | Salz im Topöl [ppm] |
| Produkt aus 1 + 40 mol PO | 30 | 3 | 15 | 30 | 33 | 41 | 45 | 46 | 46 | 46 | 0,35 | 64 |
| Produkt aus 1 + 50 mol PO | 30 | 1 | 17 | 24 | 29 | 37 | 46 | 46 | 46 | 46 | 0,24 | 52 |
| Produkt aus 2 + 40 mol PO | 30 | 2 | 9 | 16 | 23 | 28 | 40 | 45 | 46 | 46 | 0,32 | 43 |
| Produkt aus 2 + 50 mol PO | 30 | 1 | 10 | 19 | 32 | 40 | 45 | 46 | 46 | 46 | 0,41 | 81 |
| Produkt aus 3 + 40 mol PO + 5 mol EO | 30 | 4 | 15 | 27 | 39 | 44 | 44 | 45 | 45 | 46 | 0,38 | 71 |
| Produkt aus 3 + 50 mol PO + 8 mol EO | 30 | 3 | 12 | 24 | 36 | 42 | 44 | 45 | 44 | 46 | 0,47 | 88 |
| Produkt aus 4 + 40 mol PO + 7 mol EO | 30 | 2 | 14 | 27 | 35 | 43 | 43 | 45 | 45 | 46 | 0,26 | 33 |
| Produkt aus 4 + 50 mol PO + 10 mol EO | 30 | 1 | 9 | 16 | 22 | 29 | 38 | 44 | 44 | 46 | 0,31 | 32 |
| Standard: Dissolvan 4738 | 80 | 1 | 3 | 10 | 15 | 21 | 30 | 39 | 39 | 40 | 0,95 | 104 |

## Patentansprüche

1. Verwendung alkoxylierter Polyglycerine mit einem Molekulargewicht von 250 bis 100.000 Einheiten, welche 2 bis 100 Glycerineinheiten umfassen, deren freien OH-Gruppen mit Ethylenoxid und Propylenoxid im Verhältnis von 1:2 bis 1:10 alkoxyliert sind, so dass das alkoxylierte Polyglycerin einen Alkoxylierungsgrad von 1 bis 100 Alkylenoxideinheiten pro freier OH-Gruppe aufweist, zur Spaltung von Öl/Wasser-Emulsionen in Mengen von 0,0001 bis 5 Gew.-%, bezogen auf den Ölgehalt der zu spaltenden Emulsion.

2. Verwendung gemäß Anspruch 1, worin die Zahl der Glycerineinheiten zwischen 3 und 50 liegt.

3. Verwendung gemäß Anspruch 1 und/oder 2, wobei die alkoxylierten. Polyglycerine ein Molekulargewicht von 500 bis 50.000 Einheiten aufweisen.

4. Verwendung gemäß einem oder mehreren der Ansprüche 1 bis 3, bei denen der mittlere Alkoxylierungsgrad zwischen 1 und 70 Alkylenoxideinheiten pro freier OH-Gruppe beträgt.

## Claims

1. The use of alkoxylated polyglycerols with a molecular weight of from 250 to 100 000 units which comprise 2 to 100 glycerol units whose free OH groups are alkoxylated with ethylene oxide and propylene oxide in the ratio of from 1:2 to 1:10 so that the alkoxylated polyglycerol has a degree of alkoxylation of from 1 to 100 alkylene oxide units per free OH group, for demulsifying oil/water emulsions in amounts of from 0.0001 to 5% by weight, based on the oil content of the emulsion to be demulsified.

2. The use as claimed in claim 1, in which the number of glycerol units is between 3 and 50.

3. The use as claimed in claim 1 and/or 2, where the alkoxylated polyglycerols have a molecular weight of from 500 to 50 000 units.

4. The use as claimed in one or more of claims 1 to 3, in which the average degree of alkoxylation is between 1 and 70 alkylene oxide units per free OH group.

## Revendications

1. Utilisation de polyglycérols alcoxylés ayant une masse moléculaire de 250 à 100 000 unités, qui comprennent 2 à 100 motifs glycérol, dont les groupes OH libres sont alcoxylés par de l'oxyde d'éthylène et de l'oxyde de propylène selon un rapport de 1:2 à 1:10 de telle sorte que le polyglycérol alcoxylé présente un degré d'alcoxylation de 1 à 100 motifs oxyde d'alkylène par groupe OH libre, pour désémulsionner des émulsions huile/eau en des quantités de 0,0001 à 5 % en poids par rapport à la teneur en huile de l'émulsion devant être désémulsionnée.

2. Utilisation selon la revendication 1, pour laquelle le nombre des motifs glycérol est compris entre 3 et 50.

3. Utilisation selon les revendications 1 et/ou 2, pour laquelle les polyglycérols alcoxylés ont une masse moléculaire de 500 à 50 000 unités.

4. Utilisation selon l'une ou plusieurs des revendications 1 à 3, pour laquelle le degré moyen d'alcoxylation est compris entre 1 et 70 motifs oxyde d'alkylène par groupe OH libre.
